Europäisches Patentamt

European Patent Office

Office européen des brevets

(19)

(11) Veröffentlichungsnummer : **0 149 855**
**B1**

(12) **EUROPÄISCHE PATENTSCHRIFT**

(45) Veröffentlichungstag der Patentschrift :
26.04.89

(51) Int. Cl.⁴ : **B 63 B 1/04**, B 63 B 39/00

(21) Anmeldenummer : 84116497.3

(22) Anmeldetag : 29.12.84

(54) **Rumpf für ein Wasserfahrzeug.**

(30) Priorität : 20.01.84 DE 3401908

(43) Veröffentlichungstag der Anmeldung :
31.07.85 Patentblatt 85/31

(45) Bekanntmachung des Hinweises auf die Patenterteilung : 26.04.89 Patentblatt 89/17

(84) Benannte Vertragsstaaten :
BE DE FR GB IT NL SE

(56) Entgegenhaltungen :
US—A— 1 259 572

(73) Patentinhaber : Marschewski, Henry
Dürerweg 11b
D-2190 Cuxhaven 13 (DE)

(72) Erfinder : Marschewski, Henry
Dürerweg 11b
D-2190 Cuxhaven 13 (DE)

(74) Vertreter : Bolte, Erich, Dipl.-Ing.
c/o Meissner & Bolte Patentanwälte Hollerallee 73
D-2800 Bremen 1 (DE)

EP 0 149 855 B1

**Beschreibung**

Die Erfindung betrifft einen Rumpf für ein Wasserfahrzeug mit konvexen Konstruktionsspanten, die mit Abstand zueinander unter Bildung einer bogenförmigen Kiellinie angeordnet sind (US-A-1 259 572).

Die Erfindung spricht insbesondere Wasserfahrzeuge an, die für den Einsatz auf See bestimmt sind, beispielsweise Handelsschiffe, Segelboote, Motorboote o. dgl. Derartige Wasserfahrzeuge werden besonders bei schwerer See durch die Wellen auf vielfältige Art zusätzlich zur Fahrt durchs Wasser bewegt. Bei diesen in Abhängigkeit vom Wellenschema periodisch, aber auch aperiodisch auftretenden Bewegungen handelt es sich zum einen um Schlingerbewegungen quer zur Längsachse des Schiffes und zum anderen um sogenannte Stampfbewegungen, die durch ständige Veränderung der Längsschiffsneigung entstehen. Die Überlagerung dieser beispielshaft genannten Bewegungen führt mit zunehmendem Seegang zu Belastungen des Schiffsrumpfes und der Ruderanlage, aber auch der Besatzung und ggf. der Ladung.

Schließlich ist man aufgrund vorwiegend wirtschaftlicher Überlegungen bemüht, den Rumpf eines Wasserfahrzeugs derart zu gestalten, daß dieses ein hohes Geschwindigkeitspotential besitzt und im Falle eines motorbetriebenen Wasserfahrzeuges möglichst wenig Treibstoff benötigt. Das letztgenannte Kriterium ist insbesondere bei der stetig zunehmenden Rohstoffverknappung von großer Bedeutung.

Nun ist bereits aus der US-A-1 259 572 ein Schiffsrumpf bekannt, der über konvexe Konstruktionsspanten und eine bogenförmige Kiellinie verfügt. Bei diesem bekannten Schiffsrumpf sind jedoch die Konstruktionsspanten und die Kiellinie im Hinblick auf einen einfachen Bau des Schiffsrumpfes ausgestaltet. Den eingangs genannten Kriterien, nämlich dem guten Seegangsverhalten und geringen Rumpfwiderstand, trägt dieser bekannte Schiffsrumpf aber noch nicht in ausreichendem Maße Rechnung.

Hiervon ausgehend liegt der Erfindung die Aufgabe zugrunde, einen Rumpf für ein Wasserfahrzeug zu schaffen, der ein gutmütiges, ausgewogenes Seegangsverhalten zeigt, und zusätzlich über einen möglichst geringen Wasserwiderstand verfügt.

Zur Lösung dieser Aufgabe ist der erfindungsgemäße Rumpf dadurch gekennzeichnet, daß sämtliche Konstruktionsspanten kreisbogenförmig ausgebildet sind sowie etwa gleiche Radien aufweisen, und die Mittelpunkte der Konstruktionsspanten auf einer gemeinsamen, parallel zur kreisbogenförmigen Kiellinie verlaufenden Spantenmittelpunktskurve (Metazentrenlinie) liegen. Bei einer Stabilitätsbetrachtung des erfindungsgemäß ausgebildeten Rumpfes, bei der davon ausgegangen wird, daß das Schiff bzw. das Wasserfahrzeug im Anfangsmetazentrum aufgehängt ist, besitzt dieser im Gegensatz zu üblichen Rümpfen, die über eine Gewichtsstabilität und eine Formstabilität verfügen, keinen Formstabilitätsanteil. Die Formstabilität kommt bei der vorgenannten Betrachtungsweise dadurch zustande, daß ausgehend von einer aufrechten Ruhelage des Wasserfahrzeugs mit zunehmender Krängung das Metazentrum ausgehend von einem Anfangsmetazentrum sich verändert zu einem Scheinmetazentrum. Bei dem erfindungsgemäßen Rumpf mit kreisbogenförmigen Spanten existiert jedoch kein Scheinmetazentrum, d. h. unabhängig von der Krängung des Schiffes fällt das Scheinmetazentrum stets mit dem Ausgangsmetazentrum, nämlich dem Kreisbogenmittelpunkt des jeweiligen Konstruktionsspantes zusammen. Aufgrund der fehlenden Formstabilität verfügt der erfindungsgemäß ausgebildete Rumpf zwar über eine relativ geringe Anfangsstabilität, hat aber eine hohe Endstabilität. Ein Fahrzeug mit einem erfindungsgemäß ausgebildeten Rumpf verfügt über größte Stabilität bei einer Krängung von 90°. Die Stabilität steigt also ausgehend von der Normalschwimmlage bei zunehmender Krängung allmählich an, bis sie bei einem praktisch kaum erreichbaren Krängungswert schließlich ihren Maximalwert erreicht. Im Hinblick auf das Seeverhalten ist hieraus einerseits zu schließen, daß Schlingerbewegungen eines Wasserfahrzeuges mit dem erfindungsgemäßen Rumpf stark gedämpft werden und andererseits ein Kentern praktisch nicht möglich ist.

Da auch die Kiellinie erfindungsgemäß einen kreisbogenförmigen Verlauf aufweist, treffen die vorgenannten Bedingungen auch für die Längsstabilität des Rumpfes zu. Ein Stampfen des Wasserfahrzeuges in Längsschiffsrichtung infolge der Wellenbewegung wird also auch in optimaler Weise gedämpft.

Ein weiterer Vorteil des erfindungsgemäßen Rumpfes liegt in seinem geringen Wasserwiderstand. Durch den bogenförmigen Kielverlauf werden nämlich im Bereich des Vorschiffs die zu verdrängenden Wassermassen laminar nach unten und schräg um den Schiffskörper herumgelenkt. Der Rumpf bietet dadurch optimale Gleiteigenschaften, sofern es die Antriebsenergie des Wasserfahrzeuges zuläßt. Im Gegensatz zu herkömmlichen Schiffsrümpfen mit einem spitzen Bug, der die Wellen schneidet, wird beim erfindungsgemäßen Rumpf durch das gleichmäßige Ablenken der verdrängten Wassermassen eine kaum merkbare Bugwelle gebildet, d. h. es geht nur wenig Energie verloren. Auch der Wasserabriß am Heck ist bei dem vorliegenden Rumpf günstiger. Das Wasser kann nämlich nicht nur von der Seite, sondern auch von unten her nachströmen. Bei einer entsprechenden Schiffsgeschwindigkeit entstehen dadurch keine Turbulenzen im Heckbereich durch einen unsauberen Strömungsabriß, wie dieses bei herkömmlichen Schiffsrümpfen häufig zu beobachten ist. Hierdurch arbeiten bei einem motorbetriebenen Wasserfahrzeug die Pro-

peller wirkungsvoller.

Durch die vollständig oder zumindestens größtenteils gewölbte Außenfläche des in Rede stehenden Rumpfes weist dieser relativ druckunempfindliche Oberflächen auf. Durch die Wölbungen werden senkrecht angreifende Kräfte aufgesplittet in unterschiedliche Kraftkomponenten. Die Schiffsaußenhaut ist somit unempfindlich gegen Beulung oder ähnliche Verformungen. In Verbindung mit dem ruhigen Seegangsverhalten des erfindungsgemäßen Rumpfes infolge der gewölbten Oberflächen entstehen geringere Belastungen der Schiffsverbände, als dieses bei herkömmlichen Schiffsrümpfen üblich ist. Eine entsprechende leichtere Dimensionierung der Außenhaut und der Schiffsverbände ist dadurch möglich.

Letztlich läßt sich der erfindungsgemäße Schiffsrumpf einfacher herstellen. Die kreisbogenförmigen Spanten sind problemlos zu biegen bzw. zu schneiden, und die einzelnen Platten der Außenhaut können jeweils gleichermaßen geformt sein, da sie zumindest größtenteils eine gleiche Wölbung aufweisen. Die Herstellkosten eines solchen Rumpfes können dadurch erheblich reduziert werden, was gerade bei den ständig steigenden Lohnkosten ein wichtiger Aspekt ist.

Bei einem besonders vorteilhaften Ausführungsbeispiel der Erfindung weisen sämtliche Konstruktionsspanten einen in etwa gleichen Radius auf. Dadurch liegen die Mittelpunkte sämtlicher Konstruktionsspanten auf einer gemeinsamen, parallel zur Kiellinie verlaufenden Spantenmittelpunktskurve. Letztere weist also ebenfalls einen kreisbogenförmigen Verlauf auf. Eine derartige Bauweise des Rumpfes ist besonders kostengünstig, weil sämtliche Konstruktionsspanten nicht nur leicht herstellbar, sondern auch im Radius gleich sind. Darüber hinaus ermöglicht ein solcher Rumpf die Unterbringung eines großen Laderaums im Inneren und bietet eine große Decksfläche. Diese Eigenschaften sind besonders bei Handelsschiffen vorteilhaft, die eine möglichst große Ladekapazität aufweisen sollen.

Eine weitere, alternative Ausführungsform des erfindungsgemäßen Rumpfes sieht vor, die zum Bug bzw. Heck gerichteten Konstruktionsspanten mit kleineren Radien zu versehen. Die Rumpf- und Heckpartie eines solchen Wasserfahrzeugs verjüngt sich auf diese Weise gegenüber den mittleren Hauptspanten. Die Verjüngung des Bugs bzw. des Hecks, also die Verringerung der Radien der außenliegenden Spanten, ist zweckmäßigerweise symmetrisch, kann jedoch auch unterschiedlich sein. Ein derart ausgebildeter Schiffsrumpf weist einen relativ kleinen Völlegrad auf, der beispielsweise bei 0,4 liegen kann. Durch die stark gebogene Kiellinie eines solchen Rumpfes eignet sich ein damit versehenes Wasserfahrzeug insbesondere zum Einsatz als Eisbrecher.

Eine bevorzugte Weiterbildung des hier in Rede stehenden Rumpfes sieht Konstruktionsspanten mit einem maximal halbkreisförmigen Verlauf vor. Es entstehen dadurch keine Einschnürungen der Decksbreite durch die Spanten, so daß eine relativ große Decksfläche erreichbar ist.

Weiterhin sieht die Erfindung vor, die halbkreisförmig ausgebildeten Konstruktionsspanten bis zur Deckslinie hin durch vorzugsweise aufrechte, also parallel zueinander verlaufende Bordwandabschnitte zu verlängern, die keine Wölbung aufweisen. Auf diese Weise kann man einen Sprung im Decksverlauf verhindern, wodurch es möglich wird, einen geradlinigen Decksverlauf zu erhalten. Es ist alternativ jedoch auch möglich, durch weitere Verlängerung der aufrecht an den halbkreisförmigen Spanten anschließenden Parallelen einen negativen Deckssprung zu erhalten, d. h. das Deck ist nach oben hin gewölbt. Auf diese Weise ist besonders bei Frachtschiffen ein zusätzlicher Laderaumgewinn zu erzielen.

Nach einem weiteren Vorschlag der Erfindung können das Heck oder der Bug als Spiegel, also ebenflächig ausgebildet sein. Darüber hinaus kann ein Spiegel sowohl am Heck als auch am Bug vorhanden sein. Dadurch fallen für ein Handelsschiff relativ schlecht ausnutzbare, sich stark verjüngende Heck- und/oder Bugüberhänge weg. Im übrigen wird dadurch eine Vereinfachung der Herstellung im Bug- bzw. Heckbereich geschaffen, die aufgrund ihrer sehr starken Wölbung naturgemäß aufwendig herstellbar sind. Um gleichwohl einen günstigen Wasserabriß am Heck bzw. eine günstige Verdrängungscharakteristik im Bugbereich zu erhalten, liegen die Spiegelbereiche im Heck bzw. im Bugbereich außerhalb der Konstruktionswasserlinie.

Bei einem weiteren Ausführungsbeispiel der Erfindung kann im Unterwasserbereich insbesondere mittschiffs der Boden des Rumpfes flach bzw. lediglich in Längsschiffsrichtung gewölbt ausgebildet sein. Auf diese Weise ist eine zusätzliche Tiefgangsverringerung am erfindungsgemäßen Schiffsrumpf möglich, ohne daß dadurch die günstigen Seegangseigenschaften nennenswert beeinträchtigt werden. Ein mit einem solchen Rumpf ausgestattetes Wasserfahrzeug eignet sich naturgemäß für besonders flache Gewässer. Dadurch kommt ein solcher Rumpf besonders für solche Schiffe in Frage, die aufgrund ihrer Aufgabe flache Häfen bzw. Flüsse befahren sollen. Ebenfalls eignet sich ein solcher Rumpf besonders für Sportboote. Alternativ kann unter dem flachen Boden, aber auch unter einem gewölbten Boden ein Kiel vorgesehen sein zur Vergrößerung der Gewichtsstabilität und des Lateralplanes. Ein solcher Rumpf eignet sich besonders für Segelfahrzeuge.

Ein Ausführungsbeispiel des erfindungsgemäßen Rumpfes wird nachfolgend anhand der Figuren 1-6 der Zeichnung näher erläutert.

Es zeigen :

Fig. 1 einen Längsriß eines Rumpfes eines Wasserfahrzeugs ohne Aufbau,

Fig. 2 einen Spantenriß des Rumpfes gemäß der Fig. 1,

Fig. 3 einen Wasserlinienriß des Rumpfes gemäß der Fig. 1 und 2,

Fig. 4 eine schematische Seitenansicht des Rumpfes gemäß der Fig. 1,

Fig. 5 einen schematischen Querschnitt durch den Rumpf gemäß der Fig. 1 und 4 und

Fig. 6 eine Decksansicht des erfindungsgemäßen Rumpfes.

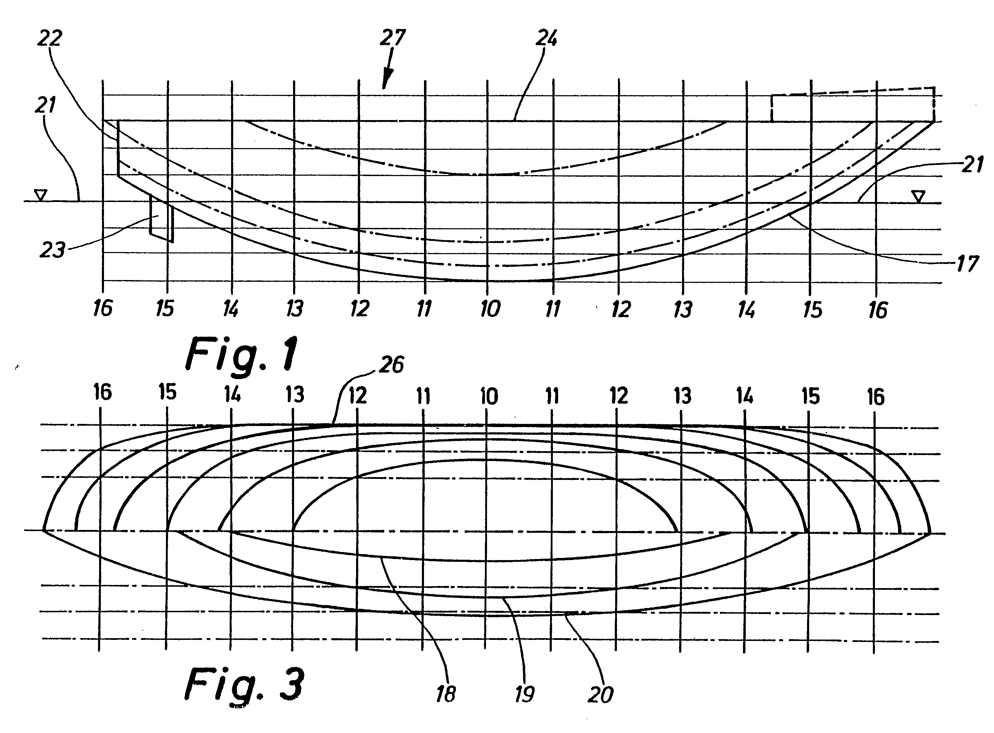

Die Figuren 1-3 zeigen einen Linienriß eines Rumpfes mit Konstruktionsspanten 10-16, die jeweils einen gleichen Radius aufweisen. Die jeweils mit gleichem Abstand vor und hinter dem mittleren Konstruktionsspant 10 liegenden Konstruktionsspanten 11-16 sind im hier gezeigten Ausführungsbeispiel des Rumpfes gleich ausgebildet, weisen also eine gleiche Spantfläche auf. Eine Kiellinie 17 ist auch hier kreisbogenförmig ausgebildet, jedoch mit einem — verglichen zu den Konstruktionsspanten 10-16 — um ein Vielfaches größeren Radius.

Wie die untere Hälfte des Wasserlinienrisses der Fig. 3 deutlich zeigt, verlaufen aufgrund der vorstehend beschriebenen Ausbildung der Konstruktionsspanten 10-16 und der Kiellinie 17 die Senten 18-20 relativ flach. Dieser für den erfindungsgemäßen Rumpf typische Verlauf der Senten 18-20 deutet auf einen günstigen Wasserwiderstand des Rumpfes hin. Bei im Verhältnis zum Radius der Konstruktionsspanten 10-16 größer werdendem Radius der Kiellinie 17 nimmt der Schlankheitsgrad der Senten 18-20 noch mehr zu. Im vorliegenden Ausführungsbeispiel weist das Verhältnis zwischen dem Radius der Kiellinie 17 und dem Radius der Konstruktionsspanten 10-16 beispielsweise 6,5 auf. Über einen ähnlichen Wert verfügt das Längen-Breiten-Verhältnis der Konstruktionswasserlinie 21.

Wie die Fig. 1 zeigt, verfügt das Heck des hier gezeigten Rumpfes über einen Spiegel 22. Letzterer verläuft hier vertikal, wie er für ein Motorschiff, insbesondere motorbetriebenes Frachtschiff, üblich ist. Für Yachten, vorzugsweise Segelyachten, kann der Spiegel 22 auch einen geneigten Verlauf aufweisen, und zwar sowohl nach hinten als auch zum Bug hin.

Mit geringfügigem Abstand vom Heck bzw. vom Spiegel 22 ist am Rumpf, nämlich im Bereich des hinteren Konstruktionsspants 15, ein freistehendes Ruder 23 angeordnet. Das Ruder 23 ist vorzugsweise als Balanceruder ausgebildet. Alternativ kann dem Ruder 23 aber auch ein hier nicht gezeigtes Skeg vorgeordnet sein. Dann ist zweckmäßigerweise das Ruder 23 um eine vordere, aufrechte Achse drehbar, also nicht balanciert. Im übrigen ist die Anordnung des Ruders 23 am Rumpf hier derart getroffen, daß die in der Fig. 1 nicht dargestellte, aufrechte Drehachse desselben geringfügig oberhalb der Konstruktionswasserlinie 21 durch die Außenhaut des Rumpfes hindurchtritt.

Da der Boden des hier gezeigten Rumpfes im Unterwasserbereich ebenfalls gewölbt ist, ist an diesem Rumpf kein Kiel vorgesehen. Aufgrund der Wölbung im Unterwasserbereich reicht die dadurch entstehende Lateralfläche aus, um eine genügende Kursstabilität des Wasserfahrzeugs zu gewährleisten.

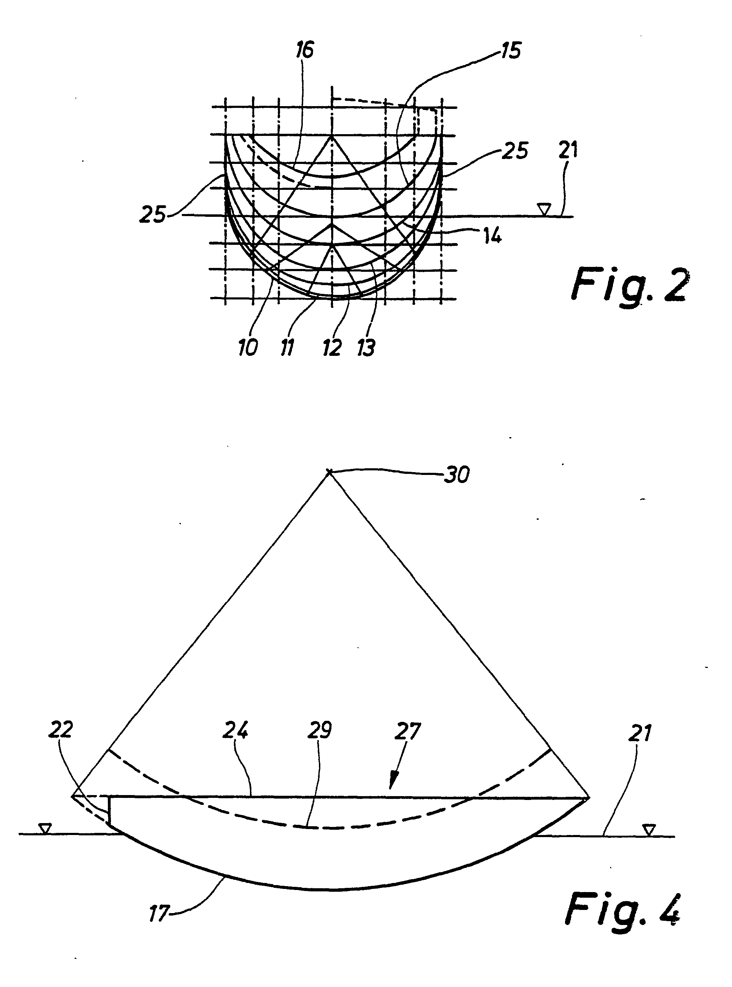

Der Verlauf einer Deckslinie 24 ist bei dem hier gezeigten Rumpf geradlinig, d. h. es ist kein Deckssprung vorhanden. Zu diesem Zweck sind die maximal halbkreisförmig verlaufenden Konstruktionsspanten, und zwar hier die Konstruktionsspanten 10-15, durch aufrechte Spantverlängerungen 25 bis zur Deckslinie 24 verlängert. Wie die Fig. 2 deutlich zeigt, verlaufen die Spantverlängerungen 25 gegenüberliegender Bordwandseiten des Rumpfes parallel zueinander. Die Ansätze der Spantverlängerungen 25 an den Konstruktionsspanten 10-15 liegen oberhalb der Konstruktionswasserlinie 21, wodurch der Rumpf im Unterwasserbereich vollständig gewölbt ist. Die längste Spantverlängerung 25 weist der am tiefsten liegende, mittige Konstruktionsspant 10 auf. Dagegen verfügen die außenliegenden Konstruktionsspanten 16 im Bug- und Heckbereich über keine Spantverlängerung 25, da sie keinen vollständigen Halbkreis beschreiben.

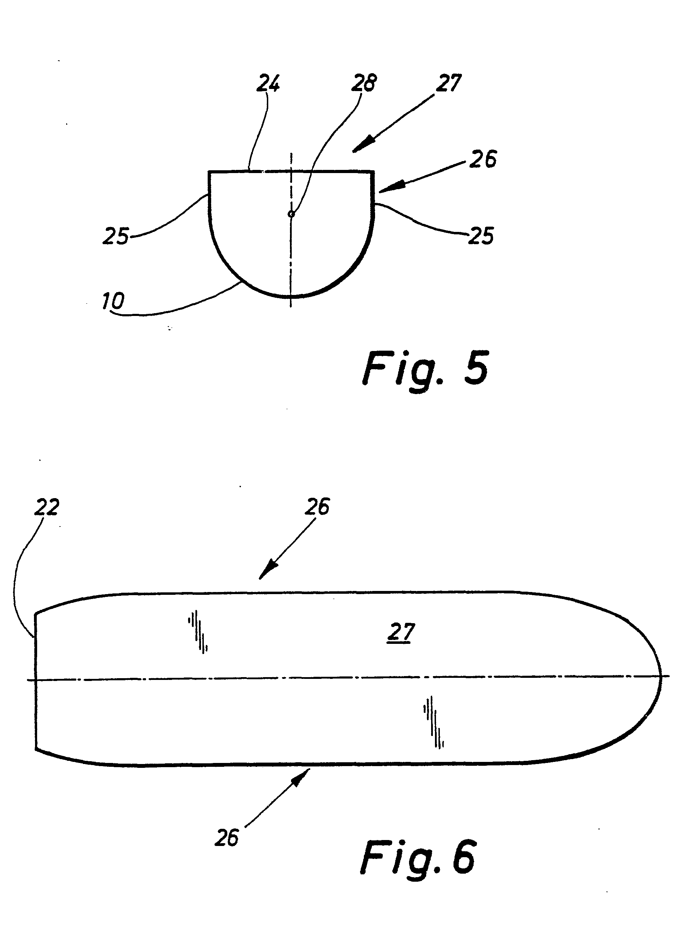

Durch die Spantverlängerung 25 an beiden Seiten der Bordwände des Rumpfes entstehen oberhalb der Konstruktionswasserlinie 21 ähnlich wie beim Spiegel 22 ebenflächige Bordwandbereiche 26. Letztere führen dazu, daß im mittigen Bereich des Rumpfes das Deck 27 parallele Seitenflächen aufweist, also gerade Deckslinien 24 entstehen, wie insbesondere die Figuren 3 und 6 zeigen.

Aus der Fig. 5 geht die Lage des (Breiten-) Matazentrums 28 hervor. Dieses liegt nämlich im Mittelpunkt der Konstruktionsspanten 10-16. Da die Konstruktionsspanten 10-16 jedoch zur Bildung einer einen Kreisbogenverlauf aufweisenden Konstruktionswasserlinie 21 zueinander höhenversetzt sind, liegen sämtliche Metazentren 28 auf einer parallel zur Kiellinie 17 verlaufenden Metazentrenlinie 29, die in der Fig. 4 dargestellt ist. Die Metazentrenlinie 29 weist einen Radius auf, der dem Radius der Kiellinie 17 abzüglich des Radius der Konstruktionsspanten 10-16 entspricht, also kleiner als der Radius der Kiellinie 17 ist.

Da auch die Kiellinie 17 kreisbogenförmig verläuft, liegt das Längenmetazentrum 30 im Mittelpunkt des Radius der Kiellinie 17.

Die Fläche des Decks 31 des in diesem Ausführungsbeispiel gezeigten Rumpfes geht aus der Fig. 6 hervor. Demnach ist das Deck 31 in der Mitte des Rumpfes durch zwei parallele, nämlich die ebenen Bordwandbereiche 26 seitlich begrenzt. Im Bugbereich schließt sich hieran eine in etwa elliptisch ausgebildete Vordecksfläche an. Im Bereich des Hecks verjüngt sich die Fläche des Decks 31 bogenförmig zum Spiegel 22 hin. Letztererbegrenzt das Deck 27 im achtern Bereich des Rumpfes durch eine quer zur Längsrichtung desselben verlaufende Gerade.

Die vorstehend beschriebene, in der Fig. 6 dargestellte Fläche des Decks 31 hat hier eine charakteristische Gestalt für Frachtschiffe mit konventionellem Rumpf. Durch Konstruktionsspanten mit unterschiedlichen Radien bzw. durch zum Deck hin konvergierende Spantverlängerungen 25 kann der Rumpf insbesondere im Schiffsbereich einen bauchigeren Verlauf erhalten, wodurch das Deck 31 im mittleren Bereich keine Geraden aufweist, sondern an den Seiten einen durchgehend bogenförmigen Verlauf. Dadurch entstehen für Sportboote, insbesondere Segelboote, typische Decksflächen.

## Patentansprüche

1. Rumpf für ein Wasserfahrzeug mit konvexen Konstruktionsspanten (10...16), die mit Abstand zueinander unter Bildung einer bogenförmigen Kiellinie (17) angeordnet sind, dadurch gekennzeichnet, daß sämtliche Konstruktionsspanten (10...16) kreisbogenförmig ausgebildet sind sowie etwa gleiche Radien aufweisen, und die Mittelpunkte der Konstruktionsspanten (10...16) auf einer gemeinsamen, parallel zur kreisbogenförmigen Kiellinie (17) verlaufenden Spantenmittelpunktskurve (Metazentrenlinie 29) liegen.

2. Rumpf nach Anspruch 1 sowie einem oder mehreren der weiteren Ansprüche, dadurch gekennzeichnet, daß die Konstruktionsspanten (10....16) maximal einen halbkreisförmigen Verlauf aufweisen.

3. Rumpf nach Anspruch 1 oder 2, dadurch gekennzeichnet, daß die Konstruktionsspanten (10....16), insbesondere die mittleren Konstruktionsspanten (11...16), zu einer Deckslinie (24) durch Spantenverlängerungen (25) verlängert sind.

4. Rumpf nach Anspruch 3, dadurch gekennzeichnet, daß die Spantenverlängerungen (25) als parallel gegenüberliegende Geraden ausgebildet sind.

5. Rumpf nach Anspruch 1 sowie einem oder mehreren der weiteren Ansprüche, dadurch gekennzeichnet, daß das Heck und/oder der Bug einen Spiegel (22) aufweisen.

6. Rumpf nach Anspruch 5, dadurch gekennzeichnet, daß der bzw. die Spiegel (22) außerhalb der Konstruktionswasserlinie (21) liegen.

7. Rumpf nach Anspruch 1 sowie einem oder mehreren der weiteren Ansprüche, dadurch gekennzeichnet, daß dieser im Unterwasserbereich, insbesondere mittschiffs, eine Abflachung aufweist zur Tiefgangsverringerung.

8. Rumpf nach Anspruch 1 sowie einem oder mehreren der weiteren Ansprüche, dadurch gekennzeichnet, daß der Völligkeitsgrad den Faktor 0,4 aufweist.

9. Rumpf nach Anspruch 1 sowie einem oder mehreren der weiteren Ansprüche, dadurch gekennzeichnet, daß das Verhältnis zwischen dem Radius der Kiellinie (17) und dem Radius des (mittleren) Konstruktionsspantes (10) in etwa 6,5 beträgt.

## Claims

1. Hull for a water craft, with convex construction frames (10 to 16) which are arranged at a distance from one another to form an arcuate keel line (17), characterized in that all the construction frames (10 to 16) are designed in the form of an arc of a circle and have approximately the same radii, and the centre-points of the construction frames (10 to 16) are located on a common frame centre-point curve (metacentre line 29) extending parallel to the keel line (17) which is in the form of an arc of a circle.

2. Hull according to Claim 1 and one or more of the further claims, characterized in that the construction frames (10 to 16) extend at most along a semi-circular path.

3. Hull according to Claim 1 or 2, characterized in that the construction frames (10 to 16), especially the middle construction frames (11 to 16), are lengthened into a deck line (24) by means of frame lengthening pieces (25).

4. Hull according to Claim 3, characterized in that the frame lengthening pieces (25) extend in straight lines arranged parallel and opposite to one another.

5. Hull according to Claim 1 and one or more of the further claims, characterized in that the stern and/or the bow have a squared-off end (22).

6. Hull according to Claim 5, characterized in that the squared-off end or ends (22) are located outside the construction water line (21).

7. Hull according to Claim 1 and one or more of the further claims, characterized in that the latter has a flattened portion in the submerged region, especially amidships, for reducing the draught.

8. Hull according to Claim 1 and one or more of the further claims, characterized in that the water line coefficient has the factor 0.4.

9. Hull according to Claim 1 and one or more of the further claims, characterized in that the ratio between the radius of the keel line (17) and the radius of the (middle) construction frame (10) is approximately 6.5.

## Revendications

1. Coque pour un véhicule de navigation, comprenant des couples de tracé convexes (10 à 16), qui sont agencés à distance l'un de l'autre en formant une ligne centrale arquée (17), caractérisée en ce que tous les couples de tracé (10 à 16) sont réalisés en forme d'arc de cercle, en ce qu'ils présentent des rayons approximativement identiques, et en ce que les centres des couples de tracé (10 à 16) se trouvent sur une courbe commune (ligne des métacentres 29) qui s'étend parallèlement à la ligne centrale (17) en forme d'arc de cercle.

2. Coque suivant la revendication 1 ainsi que suivant une ou plusieurs des autres revendications, caractérisée en ce que les couples de tracé (10 à 16) présentent au maximum une allure de demi-cercle.

3. Coque suivant l'une des revendications 1 et 2, caractérisée en ce que les couples de tracé (10 à 16), en particulier les couples de tracé centraux, sont prolongés vers une ligne de pont (24) par des prolongements de couple (25).

4. Coque suivant la revendication 3, caractérisée en ce que les prolongements de couple (25) sont réalisés sous la forme de droites qui sont situées l'une en face de l'autre parallèlement.

5. Coque suivant la revendication 1 ainsi que suivant une ou plusieurs des autres revendications, caractérisée en ce que la poupe et/ou la proue présentent un plateau (22).

6. Coque suivant la revendication 5, caractérisée en ce que le ou les plateaux (22) sont situés en dehors de la ligne de flottaison de construction (21).

7. Coque suivant la revendication 1 ainsi que suivant une ou plusieurs des autres revendications, caractérisée en ce que celle-ci présente, dans la zone des oeuvres vives, en particulier au milieu du bateau, un aplatissement pour diminuer le tirant d'eau.

8. Coque suivant la revendication 1 ainsi que suivant une ou plusieurs des autres revendications, caractérisée en ce que le coefficient de finesse présente le facteur de 0,4.

9. Coque suivant la revendication 1 ainsi que suivant une ou plusieurs des autres revendications, caractérisée en ce que le rapport entre le rayon de la ligne centrale (17) et le rayon du couple de tracé (central) (10) est d'environ 6,5.

**Fig. 1**

**Fig. 3**

*Fig. 2*

*Fig. 4*

**Fig. 5**

**Fig. 6**